# EUROPÄISCHE PATENTSCHRIFT

(11) **EP 3 249 271 B1**
(45) Veröffentlichungstag und Bekanntmachung des Hinweises auf die Patenterteilung: **24.06.2020**
(21) Anmeldenummer: 17000860.1
(22) Anmeldetag: 19.05.2017
(51) Int. Cl.: E03C 1/02, E03C 1/04, F16K 11/044, F16K 31/385, F16K 31/40

(54) **VENTILBETÄTIGUNGSVORRICHTUNG UND VERFAHREN ZUM UMSCHALTEN EINER VENTILANORDNUNG**
VALVE ACTUATING DEVICE AND METHOD FOR SWITCHING A VALVE ASSEMBLY
DISPOSITIF D'ACTIONNEMENT DE SOUPAPE ET PROCÉDÉ DE COMMUTATION D'UN SYSTÈME DE SOUPAPE

(30) Priorität: 24.05.2016 DE 202016003311 U
(43) Veröffentlichungstag der Anmeldung: 29.11.2017
(73) Patentinhaber: Neoperl GmbH, 79379 Müllheim (DE)
(72) Erfinder: BIAN, Yichao, 40789 Monheim am Rhein (DE); HAUTH, Matthias, 79674 Todtnau/Muggenbrunn (DE); FANGMEIER, Martin, 79424 Auggen (DE)
(74) Vertreter: Börjes-Pestalozza, Henrich

(56) Entgegenhaltungen:
- EP-A1- 1 548 344
- DE-U1-202011 101 289

## Beschreibung

Die Erfindung betrifft eine Ventilbetätigungsvorrichtung, mit einem Bedienelement und einer über das Bedienelement betätigbaren Ventilanordnung, wobei die Ventilanordnung ein erstes Ventil, mit welchem ein erster Zulauf in einer Schließposition von einem ersten Ablauf trennbar und in einer Offenposition mit dem ersten Ablauf verbindbar ist, und ein zweites Ventil, mit welchem ein zweiter Zulauf in einer Schließposition von einem zweiten Ablauf trennbar und in einer Offenposition mit dem zweiten Ablauf verbindbar ist, aufweist, wobei eine mit dem Bedienelement betätigbare Umschaltvorrichtung zu einer gegenläufigen Überführung des ersten Ventils von der Schließposition in die Offenposition und des zweiten Ventils von der Offenposition in die Schließposition und umgekehrt eingerichtet ist.

Derartige Ventilbetätigungsvorrichtungen sind beispielsweise bei Umstellern bekannt, bei welchem ein gemeinsamer Zulauf mit einem ersten Ablauf oder einem zweiten Ablauf wahlweise verbindbar ist. Beispielsweise findet dies Anwendung bei sanitären Auslaufarmaturen, bei denen zwischen einem Ablauf, der in einen festen Auslauf, beispielsweise in einer Badewanne, mündet, und einem Ablauf, der in eine Brause mündet, umgeschaltet werden kann.

Aus der EP 1 548 344 A1 ist eine Ventilbetätigungsvorrichtung mit einem Bedienelement und einer über das Bedienelement betätigbaren Ventilanordnung bekannt. Die Ventilanordnung weist dabei ein einziges Ventil auf, mit welchem ein Zulauf in einer Schließposition von einem Ablauf trennbar und in einer Offenposition mit dem Ablauf verbindbar ist. Das Ventil der Ventilbetätigungsvorrichtung weist eine Druckkammer auf, welche über eine Befüllöffnung mit dem Zulauf verbunden und über eine Ablauföffnung mit dem Ablauf verbindbar ist, wobei mit der Druckkammer ein den Ablauf vom ersten Zulauf trennendes Ventilelement beaufschlagbar ist. Die Ablauföffnung ist mit einem Verschlusselement, das in einer Wirkverbindung mit dem Bedienelement steht, öffenbar und verschließbar.

Aus der DE 20 2011 101 289 U1 ist ein Umstellventil mit zwei Dichtelementen, die auf einer Umstellachse zwischen zwei Mitnehmern verschiebbar geführt und mit Hilfe wenigstens eines Druckelements auf Abstand voneinander gehalten sind, bekannt.

Die Erfindung betrifft weiter ein Verfahren zum Umschalten einer Ventilanordnung.

Der Erfindung die Aufgabe zugrunde, das Schaltverhalten einer Ventilbetätigungsvorrichtung zu verbessern.

Zur Lösung der genannten Aufgabe sind erfindungsgemäß die Merkmale von Anspruch 1 vorgesehen. Insbesondere wird somit zur Lösung der Aufgabe bei einer Ventilbetätigungsvorrichtung der eingangs beschriebenen Art erfindungsgemäß vorgeschlagen, dass zumindest das erste Ventil eine Druckkammer aufweist, welche über eine Befüllöffnung mit dem ersten Zulauf verbunden und über eine Ablauföffnung mit dem ersten Ablauf verbindbar ist, wobei mit der Druckkammer ein den ersten Ablauf vom ersten Zulauf trennendes Ventilelement des ersten Ventils beaufschlagbar ist und wobei die Ablauföffnung mit einem Verschlusselement, das in einer Wirkverbindung mit dem Bedienelement steht, öffenbar und verschließbar ist. Durch die erfindungsgemäße Verwendung einer Druckkammer mit einer ansteuerbaren Ablauföffnung ist ein Übergang von einem geschlossenen Zustand am Ventilelement zu einem geöffneten Zustand und/oder umgekehrt weicher ausgestaltbar. Eine Kraft zum Öffnen des Ventils muss nicht vollständig über das Bedienelement eingebracht werden, sondern kann beispielsweise zumindest teilweise von einem am Zulauf anstehenden Wasserdruck, der über die Befüllöffnung in die Druckkammer vermittelt wird, entwickelt werden. Eine Kraft zum Schließen des Ventils muss ebenfalls nicht vollständig über das Bedienelement eingebracht werden, sondern kann beispielsweise zumindest teilweise von einem am Zulauf anstehenden Wasserdruck, der auf das Ventilelement einwirkt, entwickelt werden.

Bei einer Ausgestaltung der Erfindung kann vorgesehen sein, dass das Ventilelement des ersten Ventils an einer elastischen Membran aufgehängt ist. Somit ist eine Druckkammer mit veränderlichem Volumen bildbar. Vorzugsweise trägt die Membran die Befüllöffnung der Druckkammer des ersten Ventils. Somit ist die Befüllöffnung bei einer Ventilbewegung mitbewegbar. Dies ermöglicht eine einfache Selbstreinigung der Befüllöffnung beispielsweise mit einer Reinigungsfeder. Besonders günstig ist es, wenn die Befüllöffnung an dem Ventilelement ausgebildet ist. Zusätzliche Teile an der Membran sind somit verzichtbar, und es ist ein konstruktiv einfacher Aufbau erreichbar.

Bei einer Ausgestaltung der Erfindung kann vorgesehen sein, dass die Ablauföffnung des ersten Ventils größer als die Befüllöffnung des ersten Ventils ist. Somit ist ein Druckabbau in der Druckkammer erreichbar, ohne dass die Befüllöffnung geschlossen werden muss. Ein selbsttätiges Öffnen des Ventils ist somit erreichbar, das durch einen anliegenden Wasserdruck am Zulauf unterstützt sein kann.

Bei einer Ausgestaltung der Erfindung kann vorgesehen sein, dass die Druckkammer eine erste Druckkammer ist und das zweite Ventil eine zweite Druckkammer aufweist, welche über eine Befüllöffnung mit dem zweiten Zulauf und über eine Ablauföffnung mit dem zweiten Ablauf verbindbar ist, wobei mit der zweiten Druckkammer ein den zweiten Ablauf vom zweiten Zulauf trennendes Ventilelement des zweiten Ventils beaufschlagbar ist und wobei die Ablauföffnung des zweiten Ventils mit einem, beispielsweise dem bereits erwähnten oder einem von diesem separaten, Verschlusselement, das in einer Wirkverbindung mit dem Bedienelement steht, öffenbar und verschließbar ist. Somit ist ein weiches oder Servo-Umstellen zwischen den Ventilstellungen an beiden Ventilen erreichbar. Beide Ventile sind durch ein gemeinsames Verschlusselement ansteuerbar. Dies ermöglicht eine Vereinfachung des konstruktiven Aufbaus und der Bedienung.

Bei einer Ausgestaltung der Erfindung kann vorgesehen sein, dass das Ventilelement des zweiten Ventils an einer elastischen Membran aufgehängt ist. Somit ist ein Schließen und Öffnen des zweiten Ventils durch eine druckgesteuerte Änderung eines Volumens in einer zweiten Druckkammer leicht steuerbar. Vorzugsweise trägt die Membran eine, beispielsweise die bereits erwähnte, Befüllöffnung einer, beispielsweise der bereits erwähnten, Druckkammer des zweiten Ventils. Somit ist eine Mitbewegung der Befüllöffnung bei einer Betätigung es Ventils erreichbar. Dies vereinfacht eine Selbstreinigung der Befüllöffnung, beispielsweise an einem vorzugsweise feststehenden Reinigungsstift, der in die Befüllöffnung je nach Stellposition des zweiten Ventils eintaucht.

Bei einer Ausgestaltung der Erfindung kann vorgesehen sein, dass das Verschlusselement zwischen einer ersten Position, in welcher das Ventilelement des ersten Ventils in einen Ventilsitz des ersten Ventils gedrückt ist, und einer zweiten Position, in welcher das Ventilelement des zweiten Ventils in einen Ventilsitz des zweiten Ventils gedrückt ist, verstellbar ist. Somit ist ein Stellweg des Verschlusselements durch die Schließpositionen der Ventile vorgebbar. Mit dem Verschlusselement ist somit eine Umstellung durch ein Umschalten der Ventile durchführbar.

Bei einer Ausgestaltung der Erfindung kann vorgesehen sein, dass der erste Zulauf und der zweite Zulauf miteinander verbunden sind. Somit ist ein Umstellen eines Wasserflusses aus dem gemeinsamen Zulauf in einen der beiden Abläufe erreichbar.

Bei einer Ausgestaltung der Erfindung kann vorgesehen sein, dass der erste Zulauf und der zweite Zulauf separat voneinander geführt sind. Somit ist erreichbar, dass der erste Zulauf und der zweiten Zulauf miteinander unverbunden oder verbindungsfrei geführt sind. Es sind so voneinander getrennte Strömungen alternierend schaltbar.

Bei einer Ausgestaltung der Erfindung kann vorgesehen sein, dass die Ablauföffnung des zweiten Ventils größer als die Befüllöffnung des zweiten Ventils ist. Somit ist - analog zu dem ersten Ventil - erreichbar, dass sich die zweite Drucckammer beim Öffnen der Ablauföffnung des zweiten Ventils entleert und dass sich ein Druck in der zweiten Druckkammer abbaut. Hierdurch ist ein Öffnen des zweiten Ventils mit geringem Kraftaufwand erreichbar.

Bei einer Ausgestaltung der Erfindung kann vorgesehen sein, dass die Umschaltvorrichtung räumlich zwischen dem ersten Ventil und dem zweiten Ventil angeordnet ist. Somit ist eine geringe Außenabmessung quer zu einer Betätigungsrichtung der Umschaltvorrichtung erreichbar.

Bei einer Ausgestaltung der Erfindung kann vorgesehen sein, dass die erste Druckkammer gegen die zweite Druckkammer mit einer Dichtung abgedichtet ist. Somit ist eine Beweglichkeit des Verschlusselements relativ zu den Druckkammern bei gleichzeitiger Trennung der Druckkammern erreichbar. Eine Innendruck ist somit separat für jede Druckkammer einstellbar. Dies ermöglicht ein zeitlich versetztes, vorzugsweise späteres, Öffnen eines der beiden Ventile relativ zu einem Schließen des jeweils anderen der beiden Ventile. Somit ist eine Belastung eines angeschlossenen Rohrsystems beispielsweise durch Rückstöße beim Schließen eines Ventils verringerbar. Bevorzugt ist die Dichtung zwischen den Verschlusselementen der Ventile angeordnet oder liegt an einem (gemeinsamen) Verschlusselement an.

Bei einer Ausgestaltung der Erfindung kann vorgesehen sein, dass die Ventilelemente und/oder Membranen des ersten Ventils und des zweiten Ventils jeweils zueinander punkt- oder spiegelsymmetrisch angeordnet und/oder ausgebildet sind. Somit ist ein konstruktiv einfacher Aufbau erreichbar. Es ist somit auf einfache Weise erreichbar, dass die beiden Ventile ein im Wesentlichen gleiches oder sogar identisches Schaltverhalten beider Ventile aufweisen. Dies erhöht den Bedienkomfort nochmals.

Bei einer Ausgestaltung der Erfindung kann vorgesehen sein, dass ein Steuerelement mit dem Bedienelement in Wirkverbindung steht, wobei die Ventilanordnung mit einem distalen Ende des Steuerelements betätigbar ist. Somit ist eine Betätigungskraft einfach einleitbar. Vorzugsweise ist das Steuerelement stabförmig ausgebildet. Dies ermöglicht eine besonders kompakte Bauform und/oder eine platzsparende Übertragung von Betätigungskräften in die Ventilanordnung.

Bei einer Ausgestaltung der Erfindung kann vorgesehen sein, dass das Steuerelement beweglich durch ein Ventilelement, beispielsweise das bereits erwähnte Ventilelement, des ersten Ventils oder des zweiten Ventils geführt ist. Somit ist eine Beweglichkeit des betreffenden Ventils gegenüber dem Steuerelement erreichbar, ohne für das Steuerelement zusätzlichen Bauraum zu verwenden. Eine Stellposition des betreffenden Ventils ist somit von dem Steuerelement entkoppelbar. Vorzugsweise ist das Steuerelement verschieblich geführt. Dies vereinfacht eine Abdichtung zwischen dem betreffenden Ventilelement und dem Steuerelement oder schafft eine Ablauföffnung zur Druckentlastung. Dies ist wiederum günstig für einen gesteuerten Druckaufbau in der zugehörigen Drucckammer.

Bei einer Ausgestaltung der Erfindung kann vorgesehen sein, dass das Steuerelement zumindest teilweise in dem ersten oder zweiten Ablauf angeordnet ist. Somit ist eine konstruktiv einfache Zuführung des Steuerelements zu den Ventilen erreichbar. Bevorzugt ist das Steuerelement zumindest teilweise in demjenigen Ablauf angeordnet, dessen zugehöriges Ventilelement auf dem Steuerelement beweglich angeordnet ist. Die Druckentlastung kann somit direkt in den Ablauf erfolgen.

Bei einer Ausgestaltung der Erfindung kann vorgesehen sein, dass das Verschlusselement an dem Steuerelement, insbesondere an dessen distalem Ende, ausgebildet ist. Somit ist das bereits erwähnte Verschlusselement einfach ansteuerbar, beispielsweise durch eine Lageveränderung in einer Druckkammer oder beiden Druckkammern. Bevorzugt sind das erste Verschlusselement des ersten Ventils und das zweite Verschlusselement des zweiten Ventils an einem gemeinsamen Steuerelement ausgebildet, insbesondere starr miteinander verbunden oder als gemeinsames Verschlusselement.

Bei einer Ausgestaltung der Erfindung kann vorgesehen sein, dass in einer Wirkverbindung zwischen einem, beispielsweise dem bereits erwähnten, die Ventilanordnung betätigenden Steuerelement und dem Bedienelement eine Ausgleichvorrichtung angeordnet ist, welches einen in einer Aufnahme beweglich geführten Stößel aufweist und eine Relativbewegung des Bedienelements gegen das Steuerelement zulässt. Somit ist ein Verstellweg des Bedienelements verschieden von einem Verstellweg des Steuerelements, insbesondere größer als dieser Verstellweg, einrichtbar. Eine Betätigungsbewegung des Bedienelements ist somit streckenweise von einer korrespondierenden Bewegung eines, beispielsweise des bereits erwähnten, Verschlusselements abkoppelbar, beispielsweise zu einem Rückholen des Bedienelements in eine Ausgangsposition. Bevorzugt ist ein Rückstellelement vorhanden, das der Relativbewegung eine Rückstellkraft entgegensetzt. Somit ist eine Mitführung des Steuerelements mit dem Bedienelement bis zu einem Anschlag oder Widerstand für das Steuerelement einfach erreichbar. Beispielsweise ist eine Ausgleichsvorrichtung wie in der deutschen Patentanmeldung Nr. 10 2016 001 975.1, deren Inhalt in die vorliegende Beschreibung vollständig aufgenommen wird, verwendbar.

Bei einer Ausgestaltung der Erfindung kann vorgesehen sein, dass das Bedienelement von einer Bedienelement-Rückstellfeder beaufschlagt ist. Somit ist ein Rückholen des Bedienelements in eine Ausgangsposition einfach erreichbar. Hierbei kann vorgesehen sein, dass die Bedienelement-Rückstellfeder eine größere Kraft entwickelt als ein, beispielsweise das bereits erwähnte, Rückstellelement einer, beispielsweise der bereits erwähnten, Ausgleichsvorrichtung. Somit ist ein Herstellen einer Wirkverbindung zwischen dem Bedienelement und dem Steuerelement beispielsweise in der bereits erwähnten Ausgangsposition erreichbar. Alternativ oder zusätzlich kann vorgesehen sein, dass die Bedienelement-Rückstellfeder als eine Schraubenfeder ausgebildet ist. Dies ermöglicht eine platzsparende Anordnung der Ausgleichsvorrichtung und/oder von Teilen des Steuerelements innerhalb der Bedienelement-Rückstellfeder. Somit kann die Bedienelement-Rückstellfeder ein Steuerelement, beispielsweise das bereits erwähnte Steuerelement, und/oder die Ausgleichvorrichtung umgreifen. Bevorzugt ist die Bedienelement-Rückstellfeder an einem Gehäuseteil abgestützt. Dies ermöglicht eine definierte Ausgangsposition des Bedienelements in Bezug auf den Gehäuseteil.

Bei einer Ausgestaltung der Erfindung kann vorgesehen sein, dass das Bedienelement mit einer bistabilen Stellmechanik verbunden ist. Somit ist eine Ausgangsposition des Bedienelements unabhängig von eine momentanen Stellposition der Ventilanordnung einrichtbar. Beispielsweise kann die Stellmechanik als Push-Push-Verriegelungsmechanik, insbesondere als Kugelschreibermechanik und/oder als Herzkurvenmechanik, ausgebildet sein. Dies erlaubt ein einfaches Betätigen und einen einfachen Wechsel zwischen den Positionen, da ein Benutzer nur drücken muss, um den Wechsel zu erreichen.

Bei einer Ausgestaltung der Erfindung kann vorgesehen sein, dass das Bedienelement als Handbedienelement ausgebildet ist. Die ermöglicht eine unmittelbare manuelle Betätigung. Das Bedienelement kann jedoch auch mit einem beispielsweise entfernt angeordneten Handbedienelement gekoppelt oder wirkverbunden sein. Somit ist eine Betätigung aus einer Entfernung möglich. Alternativ oder zusätzlich kann vorgesehen sein, dass das Bedienelement als motorisch, vorzugsweise elektromotorisch, verstellbares Bedienelement mit einem Antrieb gekoppelt ist. Das Bedienelement kann somit motorisch und gegebenenfalls zusätzlich manuell antreibbar sein. Beispielsweise kann das Bedienelement direkt oder indirekt mit einem beispielsweise elektrischen Antrieb verbunden, insbesondere gekoppelt, sein. Somit ist auch eine Betätigung aus einer Distanz möglich.

Alternativ oder zusätzlich sieht die Erfindung zur Lösung der genannten Aufgabe die Merkmale des nebengeordneten, auf ein Verfahren gerichteten Anspruchs vor. Insbesondere wird somit zur Lösung der Aufgabe bei einem Verfahren der eingangs genannten Art vorgeschlagen, dass die Ventilanordnung ein erstes Ventil mit einer ersten Druckkammer und ein zweites Ventil aufweist, wobei die erste Druckkammer über eine Befüllöffnung mit einen ersten Zulauf des ersten Ventils verbunden und über eine Ablauföffnung mit einem ersten Ablauf des ersten Ventils verbindbar ist, wobei zunächst die Ablauföffnung des ersten Ventils geschlossen ist, so dass ein in der ersten Druckkammer aufgebauter Druck das erste Ventil schließt, und das zweite Ventil geöffnet ist, und wobei bei einem Schließen des zweiten Ventils die Ablauföffnung des ersten Ventils geöffnet wird, so dass sich der aufgebaute Druck in der ersten Kammer abbaut und das erste Ventil freigegeben wird. Somit ist ein sanftes Schließen des ersten Ventils erreichbar, und ein Öffnen des ersten Ventils ist druckgestützt mit verringerter Betätigungskraft ausführbar.

Bei einer Ausgestaltung der Erfindung kann vorgesehen sein, dass das zweite Ventil eine zweite Druckkammer aufweist, die über eine Befüllöffnung mit einen zweiten Zulauf des zweiten Ventils verbunden und über eine Ablauföffnung mit einem zweiten Ablauf des zweiten Ventils verbindbar ist, und dass bei dem bereits erwähnten Schließen des zweiten Ventils die Ablauföffnung des zweiten Ventils geschlossen wird, so dass sich in der zweiten Druckkammer ein Druck aufbaut, der das zweite Ventil verschließt. Somit ist das bereits zum ersten Ventil beschriebene Schaltverhalten auch beim zweiten Ventil und insbesondere in vorgegebenen zeitlichen Abstand zu dem ersten Ventil oder unabhängig von den Abläufen am ersten Ventil erreichbar. Ein Schalten am ersten Ventil und ein Schalten am zweiten Ventil kann somit zeitgleich oder nahezu zeitgleich, beispielsweise so, dass ein Benutzer zwischen den beiden Schaltvorgängen nicht unterscheiden kann und/oder eine zeitliche Reihenfolge der Schaltvorgänge nicht unterscheidbar ist, zu einem Schalten am zweiten Ventil erfolgen.

Bei einer Ausgestaltung der Erfindung kann vorgesehen sein, dass eine erfindungsgemäße Ventilbetätigungsvorrichtung, insbesondere wie zuvor beschrieben und/oder nach einem der auf eine Ventilbetätigungsvorrichtung gerichteten Ansprüche, verwendet wird. Somit ist eine besonders vorteilhafte Umsetzung des erfindungsgemäßen Verfahrens erreichbar, die zumindest die beschriebenen Vorteile der erfindungsgemäßen Ventilbetätigungsvorrichtung erreichen kann.

Die Erfindung wird nun anhand vorteilhafter Ausführungsbeispielen näher erläutert, ist aber nicht auf diese Ausführungsbeispiele beschränkt. Weitere Ausführungsbeispiele ergeben sich durch Kombination der Merkmale einzelner oder mehrerer Schutzansprüche untereinander und/oder mit einzelnen oder mehreren Merkmalen der Ausführungsbeispiele.

Es zeigt:
- Fig. 1: einen Längsschnitt durch eine erfindungsgemäße Ventilbetätigungsvorrichtung, wobei ein Bedienelement in einer unteren Ruheposition, in welcher eine Ablauföffnung eines ersten Ventils verschlossen und eine zweite Ablauföffnung eines zweiten Ventils geöffnet ist, angeordnet ist,
- Fig. 2: die Ventilbetätigungsvorrichtung nach Fig. 1 in einer Zwischenstellung eines Umschaltvorgangs, in welcher beide Ablauföffnungen geöffnet sind,
- Fig. 3: die Ventilbetätigungsvorrichtung nach Fig. 1, wobei ein Bedienelement in einer oberen Ruheposition, in welcher die Ablauföffnung des ersten Ventils geöffnet und die zweite Ablauföffnung des zweiten Ventils verschlossen ist, angeordnet ist,
- Fig. 4: eine weitere erfindungsgemäße Ventilbetätigungsvorrichtung, bei welcher ein Betätigungselement mit einem Antrieb gekoppelt ist, in einer ersten Schaltposition und
- Fig. 5: die Ventilbetätigungsvorrichtung gemäß Figur 4 in einer zweiten Schaltposition.

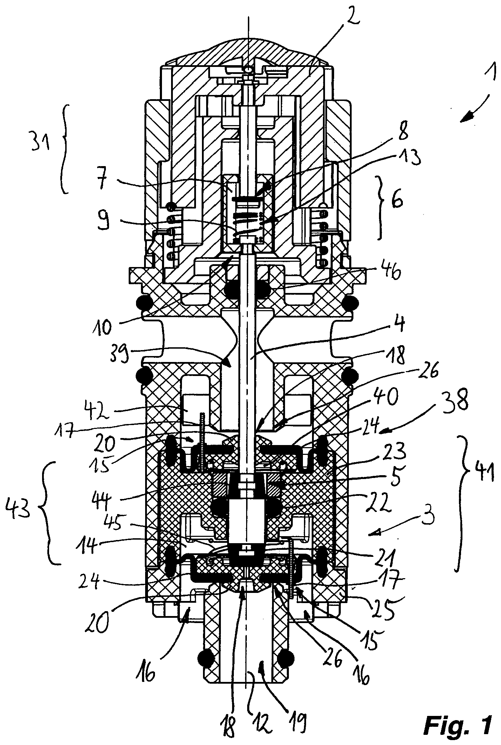

Die Figuren 1 bis 3 zeigen unterschiedliche Schaltzustände oder Schaltpositionen einer im Ganzen mit 1 bezeichneten Ventilbetätigungsvorrichtung und werden daher im Folgenden gemeinsam beschrieben.

Die Ventilbetätigungsvorrichtung 1 hat ein Bedienelement 2 - hier beispielhaft als ein Handbedienelement ausgebildet -, mit welchem eine Ventilanordnung 41 betätigbar ist.

Die Ventilanordnung 41 hat hierbei ein erstes Ventil 3, mit welchem ein erstes Ventil 3 geöffnet und verschlossen werden kann.

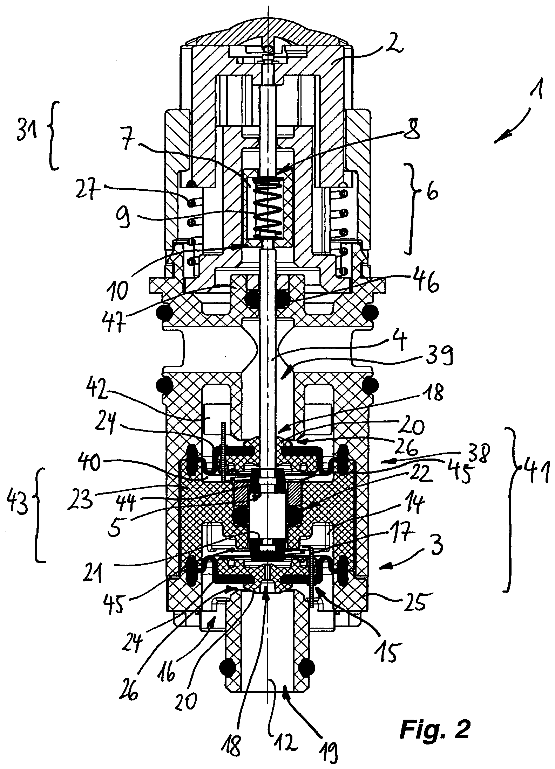

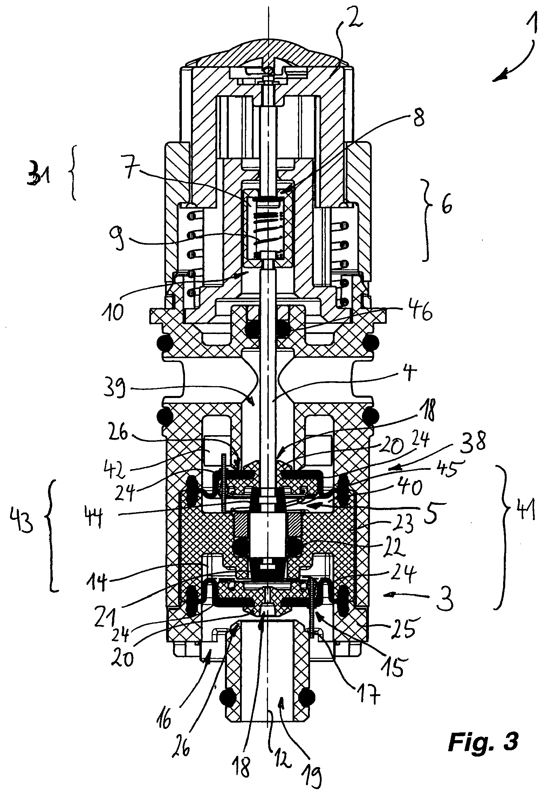

Hierbei zeigen die Figuren 1 und 2 das erste Ventil 3 im geschlossenen Zustand, also in der Schließposition, während die Figur 3 dieses erste Ventil 3 im geöffneten Zustand, also der Offenposition darstellt.

Mit dem ersten Ventil 3 ist somit ein erster Zulauf 16 von einem ersten Ablauf 19 trennbar bzw. mit dem ersten Ablauf 16 verbindbar.

Die Ventilanordnung 41 hat weiter ein zweites Ventil 38, mit welchem ein zweiter Zulauf 42 von einem zweiten Ablauf 39 trennbar ist, wenn das zweite Ventil 38 geschlossen ist. Die Schließstellung dieses zweiten Ventils 38 ist in den Figuren 2 und 3 gezeigt.

Der zweite Zulauf 42 ist mit dem zweiten Ablauf 39 verbindbar, indem das zweite Ventil 38 in seine Offenstellung überführt wird, wie dies Figur 1 zeigt.

Mit einer Umschaltvorrichtung 43, die im Folgenden noch genauer beschrieben wird, ist die Ventilanordnung 41 somit zwischen einem Zustand gemäß Figur 1, bei welchem das erste Ventil 3 geschlossen und das zweite Ventil 38 geöffnet ist, und einem Zustand gemäß Figur 3, in welchem das erste Ventil geöffnet und das zweite Ventil 38 geschlossen ist, umschaltbar.

Die Umschaltvorrichtung 43 ermöglicht somit eine gegenläufige Überführung des ersten Ventils 3 von der Schließposition in die Offenposition und des zweiten Ventils 38 von der Offenposition in die Schließposition und umgekehrt.

Das erste Ventil 3 hat eine Druckkammer 14, welche über eine Befüllöffnung 15 mit dem ersten Zulauf 16 verbunden ist.

Auf diese Weise ist ein Druck, der im Zulauf 16 anliegt, über die Befüllöffnung 15 in die Druckkammer 14 des ersten Ventils 3 übertragbar.

An dem ersten Ventil 3 ist außerdem eine Ablauföffnung 18 ausgebildet, über welche die Druckkammer 14 mit dem ersten Ablauf 19 verbindbar, wie im Folgenden noch genauer erläutert wird.

Das erste Ventil 3 hat weiter ein Ventilelement 20, mit welchem der Ablauf 19 gegen den ersten Zulauf 16 verschließbar ist.

Dieses Ventilelement 20 ist durch einen Innendruck in der Druckkammer 14 des ersten Ventils 3 beaufschlagbar, um den ersten Zulauf 16 abzutrennen.

Die Ablauföffnung 18 des ersten Ventils 3 ist mit einem Verschlusselement 21 verschließbar und öffenbar oder freigebbar. Hierbei steht das Verschlusselement 21 in Wirkverbindung mit dem Bedienelement 2, so dass die Ablauföffnung 18 durch geeignete Betätigung des Bedienelements 2 schließbar oder freigebbar ist.

Das erste Ventil 3 hat weiter eine elastische Membran 24, die zwischen einem ersten Gehäuseteil 23 und einem zweiten oder weiteren Gehäuseteil 25 eingespannt ist. An der Membran 24 ist das Ventilelement 20 des ersten Ventils 3 aufgehängt. Das Ventilelement 20 wird daher durch einen Innendruck in der Druckkammer 14 auf einen Ventilsitz 26 des ersten Ventils 3 hinzu oder von diesem weg bewegt. Da der Innendruck in der Druckkammer 14 die Membran 24 verschiebt, ist somit die Stellung des ersten Ventils durch Druckänderung in der Druckkammer 14 steuerbar.

An dem Ventilelement 20 ist die bereits erwähnte Befüllöffnung 15 ausgebildet, so dass die Befüllöffnung 15 mit der Membran 24 mitbewegt wird. Ein Reinigungsstift 17 durchsticht die Befüllöffnung 15, ohne sie zu verschließen. Durch die Bewegung beim Öffnen und Schließen des ersten Ventils 3 reinigt der Reinigungsstift 17 die Befüllöffnung 15, so dass diese sich nicht zusetzen kann.

Der Reinigungsstift 45 ist hierbei an einer Feder 45 aufgehängt, die an dem Ventilelement 20 festgelegt ist.

Dadurch, dass die Ablauföffnung 18 im Ventilelement 20 des ersten Ventils 3 größer in der Querschnittsfläche ist als die Befüllöffnung 15 des ersten Ventils 3, baut sich ein Innendruck in der Druckkammer 14 ab, sobald die Ablauföffnung 18 mit dem Verschlusselement 21 geöffnet wird.

Andererseits wird das erste Ventil 3 schließen, sobald mit dem Bedienelement 2 das Verschlusselement 21 so angesteuert wird, dass die Ablauföffnung 18 verschlossen ist. Denn dann wird ein Wasserdruck am Zulauf 16 über die Befüllöffnung 15 zu einem Druckaufbau in der Druckkammer 14 führen. Dieser Druckaufbau wird dafür sorgen, dass das Ventilelement 20 in den Ventilsitz 26 gedrückt wird. Dies verschließt das erste Ventil 3.

Sobald das Verschlusselement 21 durch Betätigung des Bedienelements 2 von der Ablauföffnung 18 entfernt wird, baut sich der Druck in der Druckkammer 14 ab, und der Wasserdruck im ersten Zulauf 16 führt dazu, dass das Ventilelement 20 mit der Membran 24 von dem Ventilsitz 26 abgelöst wird, wodurch sich das erste Ventil 3 öffnet.

Das zweite Ventil 38 weist in gleicher Weise eine zweite Druckkammer 40 auf, die ebenfalls über eine Befüllöffnung 15 mit einem zweiten Zulauf 42 verbunden ist. In analoger Weise ist auch bei dem zweiten Ventil 38 eine Ablauföffnung 18 ausgebildet, über welche die zweite Druckkammer 40 in einen zweiten Ablauf 39 entleert werden kann. Die Ablauföffnung 18 ist hierbei als Ringspalt ausgebildet, welcher zwischen dem Ventilelement 20 des zweiten Ventils 38 und dem durch das Ventilelement 20 geführten Steuerelement 4 gebildet ist.

Die Funktionsweise des zweiten Ventils 38 ist analog zu der Funktionsweise des ersten Ventils 3, weshalb funktionell und/oder konstruktiv bei beiden Ventilen 3, 38 gleichartige oder identische Bauteile und Funktionseinheiten mit denselben Bezugszeichen bezeichnet und nicht gesondert beschrieben sind. Die Ausführungen zu dem ersten Ventil 3 gelten daher zu dem zweiten Ventil 38 entsprechend.

Auch hier ist damit an dem distalen Ende 5 des Steuerelements 4 ein Verschlusselement 44 ausgebildet, mit welchem die Ablauföffnung 18 des zweiten Ventils 38 geöffnet und verschlossen werden kann, um wahlweise einen Innendruck in der zweiten Druckkammer 40 abbauen oder aufbauen zu können. Bei aufgebautem Druck in der zweiten Druckkammer 40 ist das zweite Ventil 38 geschlossen, da dann das zugehörige Ventilelement 20 in den Ventilsitz 26 des zweiten Ablaufs 39 gedrückt wird. Bei geöffneter Ablauföffnung 18 des zweiten Ventils 38 wird dagegen ein Innendruck in der zweiten Drucckammer 40 abgebaut, so dass ein Wasserdruck in dem zweiten Zulauf 42 das Ventilelement 20 aus diesem Ventilsitz 26 entfernt. Hierdurch wird das zweite Ventil 38 geöffnet.

Das Verschlusselement 21 des ersten Ventils 3 und das Verschlusselement 44 des zweiten Ventils 38 sind hierbei starr miteinander verbunden und an dem distalen Ende 5 des Steuerelements 4 ausgebildet. Die Verschlusselemente 21, 44 können auch als ein gemeinsames Verschlusselement ausgebildet sein.

Bei der Ventilbetätigungsvorrichtung 1 der Figuren 1 bis 3 sind der erste Zulauf 16 und der zweite Zulauf 42 miteinander verbunden, so dass für beide Ventile 3, 38 ein gemeinsamer Zulauf gebildet ist.

Somit kann durch einen Wechsel zwischen der Stellung gemäß Figur 1 und der Stellung gemäß Figur 3 ein Umschalten von dem gemeinsamen Zulauf auf einen der beiden Abläufe 19, 39 erreicht werden.

Die Umschaltvorrichtung 43 ist hierbei zwischen dem ersten Ventil 3 und dem zweiten Ventil 38 angeordnet.

Eine Dichtung 22 dichtet hierbei die erste Druckkammer 14 gegen die zweite Druckkammer 40 ab.

Insgesamt ist das zweite Ventil 38 identisch zu dem ersten Ventil 3 und insbesondere punktsymmetrisch bezüglich eines Punktes im Mittelpunkt der als O-Ring ausgebildeten Dichtung 22 ausgeführt.

Die Wirkverbindung zwischen dem Bedienelement 2 und der Umschaltvorrichtung 43 wird durch das bereits erwähnte, stabförmige Steuerelement 4 hergestellt.

Das Steuerelement 4 ist ausgehend von seinem distalen Ende 5, an welchem die Verschlusselemente 21 und 44 ausgebildet sind, durch das Ventilelement 20 des zweiten Ventils 38 geführt. Das Ventilelement 20 des zweiten Ventils 38 ist hierbei verschieblich auf diesem Steuerelement 4 gelagert, so dass eine Bewegung des Steuerelements 4 entkoppelt von einer Bewegung des Ventilelements 20 des zweiten Ventils 38 ist.

Nach dem Durchqueren des Ventilelements 20 des zweiten Ventils 38 verläuft das Steuerelement 4 in dem zweiten Ablauf 39 und tritt durch eine weitere Dichtung 46 aus dem zweiten Ablauf 39 aus.

An seinem proximalen Ende 10 ist das Steuerelement 4 an einer Ausgleichsvorrichtung 6 angekoppelt.

Die Ausgleichsvorrichtung 6 liegt in der Wirkverbindung zwischen dem Bedienelement 2 und dem Steuerelement 4 und dient dazu, dass das Bedienelement 2 nicht durch einen Anschlag des Verschlusselements 21 an dem Ventilelement 20 des ersten Ventils 3 behindert wird. Hierzu weist die Ausgleichsvorrichtung 6 einen Stößel 8 auf, der in einer Aufnahme 7 gegen eine Rückstellkraft eines Rückstellelements 9 verschiebbar angeordnet ist.

Es ist in den Figuren 1 bis 3 ersichtlich, dass die Aufnahme 7 unverschiebbar an dem proximalen Ende 10 des Steuerelements 4 ausgebildet ist, dass das Rückstellelement 9 in der Aufnahme 7 angeordnet ist und dass der Stößel 8 fest an dem Bedienelement 2 ausgebildet ist.

Bei weiteren Ausführungsbeispielen kann die Ausgleichsvorrichtung 6 auch dadurch realisiert sein, dass der Stößel 8 an dem proximalen Ende 10 des Steuerelements 4 ausgebildet ist, während die Aufnahme 7 fest mit dem Bedienelement 2 verbunden und mit diesem starr gekoppelt mitbewegbar ist.

Das Rückstellelement 9 kann bei weiteren Ausführungsbeispielen und insbesondere dann, wenn der Stößel 8 an dem Steuerelement 4 ausgebildet ist, außerhalb der Aufnahme 7 ausgebildet sein. Insbesondere kann hierbei das Rückstellelement 9, also die dargestellte Schraubenfeder, auf das Steuerelement 4 aufgesetzt sein, um sich von dem Gehäuseteil 47 abzustützen.

Das Bedienelement 2 wird zusätzlich von einer Bedienelement-Rückstellfeder 27 beaufschlagt, welches sich zumindest indirekt an dem Gehäuseteil 47 abstützt.

Die Rückstellkraft dieser Bedienelement-Rückstellfeder 27 ist größer als die Rückstellkraft des Rückstellelements 9.

Die Bedienelement-Rückstellfeder 27 ist als Schraubenfeder ausgebildet und umgreift die Ausgleichsvorrichtung 6 und Teile des Steuerelements 4, insbesondere dessen proximales Ende 10.

Das Bedienelement 2 ist mit einer nicht weiter dargestellten bistabilen Stellmechanik 31 ausgerüstet. Diese bistabile Stellmechanik 31 ist in an sich bekannter Weise als Push-Push-Verriegelungsmechanik, beispielsweise als eine Kugelschreibermechanik oder als eine Herzkurvenmechanik, ausgeführt. Durch die bistabile Stellmechanik 31 ist somit erreichbar, dass ein Wechsel zwischen der Schaltstellung gemäß Figur 1 und der Schaltstellung gemäß Figur 3 und zurück durch Drücken auf das Bedienelement 2 entlang der Längsachse 12 der Ventilbetätigungsvorrichtung 1 erreichbar ist.

Es sei noch erwähnt, dass der Stößel 8 aus der Aufnahme 7 über eine Stößel-Entnahmeöffnung 13, die in Figur 1 oberhalb der dargestellten Schnittebene ausgebildet ist, entfernt werden kann, um die Ausgleichvorrichtung 6 zu demontieren, bzw. umgekehrt durch Einführen des Stößels 8 montiert werden kann.

Im Betrieb der Ventilbetätigungsvorrichtung 1 wird das Umschalten der Ventilanordnung 41 dadurch erreicht, dass zunächst, beispielsweise bei dem Schaltzustand gemäß Figur 1, die erste Druckkammer 14 über die bereits beschriebene Befüllöffnung 15 des ersten Ventils 3 mit dem gemeinsamen Zulauf 16, 42 verbunden ist, wobei zunächst die Ablauföffnung 18 des ersten Ventils 3 geschlossen ist. Der aus dem gemeinsamen Zulauf 16, 42 vermittelte Druck in der ersten Drucckammer 14 schließt das erste Ventil 3 in der beschriebenen Weise. Das zweite Ventil 38 ist dagegen in der Schaltstellung gemäß Figur 1 geöffnet, da durch Öffnen der Ablauföffnung 18 die zweite Druckkammer 40 über die Ablauföffnung 18 des zweiten Ventils 38 entleert wird.

Nun wird zum Schließen des zweiten Ventils 38 die Ablauföffnung 18 des zweiten Ventils 38 verschlossen, indem durch einen Druck auf das Bedienelement 2 und die anschließende Rückführbewegung durch die Bedienelement-Rückstellfeder 27 das obere Verschlusselement 44 die Ablauföffnung 18 des zweiten Ventils 38 verschließt und gleichzeitig die Ablauföffnung 18 des ersten Ventils 3 freigibt.

Hierdurch baut sich nun ein Druck in der zweiten Druckkammer 40 auf, wodurch das Ventilelement 20 des zweiten Ventils 38 in den Ventilsitz 26 an dem zweiten Ablauf 39 gedrückt wird. Dies verschließt das zweite Ventil 38.

Es ergibt sich so kurzzeitig eine Übergangsstellung gemäß Figur 2. Die Figur 2 verdeutlicht somit, dass das Umstellen vom zweiten Ablauf 39 auf den ersten Ablauf 19 in zwei zeitlich nahezu gleichzeitig oder unabhängig voneinander ablaufenden Schritten geschieht: Einerseits wird der zweite Ablauf 39 verschlossen, andererseits wird der erste Ablauf 19 geöffnet.

Gleichzeitig wird in Figur 2 der Druck in der ersten Drucckammer 14 über die Ablauföffnung 18 des ersten Ventils 3 abgebaut, so dass das Ventilelement 20 mit der Membran 24 des ersten Ventils 3 durch den Druck im Zulauf 16 aus dem Ventilsitz 26 am ersten Ablauf 19 herausgedrückt wird. Dies öffnet das erste Ventil 3, so dass am Ende des Umschaltvorgangs die Situation gemäß Figur 3 vorliegt.

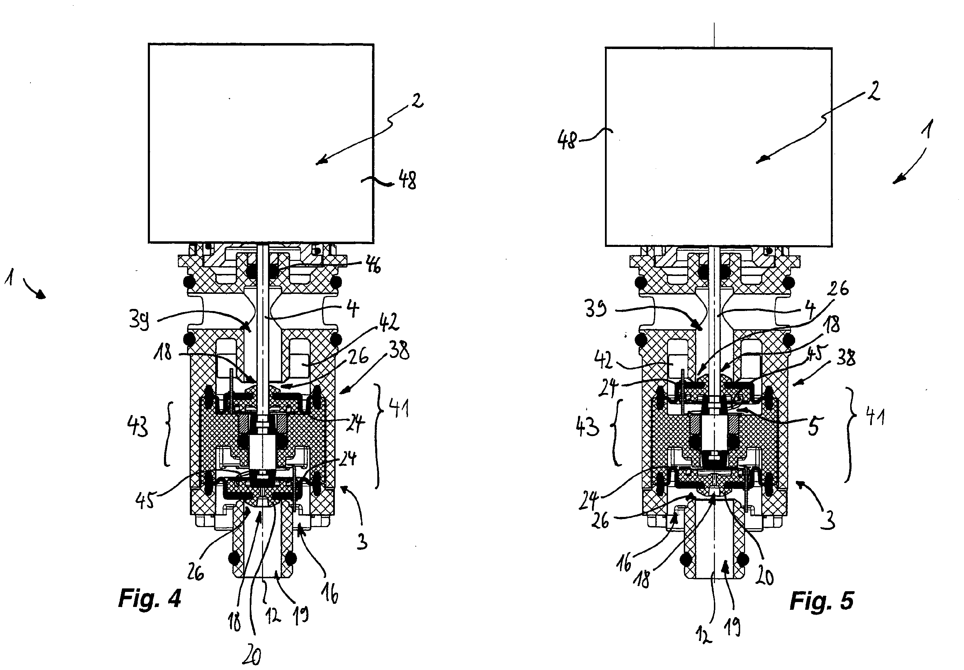

Figur 4 und Figur 5 zeigen eine weitere erfindungsgemäße Ventilbetätigungsvorrichtung 1. Bauteile und Funktionseinheiten, die konstruktiv und/oder funktionell gleichartig oder identisch zu Bauteilen oder Funktionseinheiten des vorangehenden Ausführungsbeispiel sind, sind übereinstimmenden dargestellt und/oder mit denselben Bezugszeichen bezeichnet und nicht noch einmal gesondert beschrieben. Die Ausführungen zu den Figuren 1 bis 3 gelten somit bei Figur 4 und Figur 5 entsprechend.

Figur 4 zeigt die Ventilbetätigungsvorrichtung 1 in einer Schaltposition, in welcher das erste Ventil 3 geschlossen und das zweite Ventil 38 geöffnet ist. In Figur 5 ist dagegen das erste Ventil 3 geöffnet und das zweite Ventil 38 geschlossen.

Das Ausführungsbeispiel nach den Figuren 4 und 5 unterscheidet sich von dem Ausführungsbeispiel nach Figur 1 bis 3 dadurch, dass das (nicht weiter dargestellte) Bedienelement 2 mit einem Antrieb 48 gekoppelt ist, so dass das Steuerelement 4 motorisch verstellbar ist. Das Bedienelement 2 kann beispielsweise ein an sich bekannter Aktuator des Antriebs 48 sein.

Unterhalb des Antriebs 48 ist die Ventilanordnung 1 übereinstimmend zu den Figuren 1 bis 3 ausgeführt, so dass zur Vermeidung von Wiederholungen auf die Ausführungen zu diesen Figuren verwiesen wird.

Bei der Ventilbetätigungsvorrichtung 1 mit einem ersten Ventil 3 und einem zweiten Ventil 38 wird somit erfindungsgemäß vorgeschlagen, an dem ersten Ventil 3 eine Druckkammer 14 auszubilden, die über eine Befüllöffnung 15 mit einem Druck aus einem ersten Zulauf 16 befüllbar ist, wobei das erste Ventil 3 den ersten Zulauf 16 in einer Schließposition von einem ersten Ablauf 19 trennt und wobei die Druckkammer 14 über eine Ablauföffnung 18 in den ersten Ablauf 19 entleerbar ist und die Ablauföffnung 18 mit einem durch ein Bedienelement 2 ansteuerbaren Verschlusselement 21 geöffnet und verschlossen werden kann.

### Bezugszeichenliste

- 1: Ventilbetätigungsvorrichtung
- 2: Bedienelement
- 3: (erstes) Ventil
- 4: Steuerelement
- 5: distales Ende
- 6: Ausgleichvorrichtung
- 7: Aufnahme
- 8: Stößel
- 9: Rückstellelement
- 10: proximales Ende
- 12: Längsachse
- 13: Stößel-Entnahmeöffnung
- 14: (erste) Druckkammer
- 15: Befüllöffnung
- 16: (erster) Zulauf
- 17: Reinigungsstift
- 18: Ablauföffnung
- 19: (erster) Ablauf
- 20: Ventilelement
- 21: (erstes) Verschlusselement
- 22: Dichtung
- 23: Gehäuseteil
- 24: Membran
- 25: weiteres Gehäuseteil
- 26: Ventilsitz
- 27: Bedienelement-Rückstellfeder
- 31: bistabile Stellmechanik
- 38: (zweites) Ventil
- 39: (zweiter) Ablauf
- 40: (zweite) Druckkammer
- 41: Ventilanordnung
- 42: (zweiter) Zulauf
- 43: Umschaltvorrichtung
- 44: (zweites) Verschlusselement
- 45: Feder
- 46: weitere Dichtung
- 47: Gehäuseteil
- 48: Antrieb

## Patentansprüche

1. Ventilbetätigungsvorrichtung (1), mit einem Bedienelement (2) und einer über das Bedienelement (2) betätigbaren Ventilanordnung (41), wobei die Ventilanordnung (41) ein erstes Ventil (3), mit welchem ein erster Zulauf (16) in einer Schließposition von einem ersten Ablauf (19) trennbar und in einer Offenposition mit dem ersten Ablauf (19) verbindbar ist, und ein zweites Ventil (38), mit welchem ein zweiter Zulauf (42) in einer Schließposition von einem zweiten Ablauf (39) trennbar und in einer Offenposition mit dem zweiten Ablauf (39) verbindbar ist, aufweist, wobei eine mit dem Bedienelement (2) betätigbare Umschaltvorrichtung (43) zu einer gegenläufigen Überführung des ersten Ventils (3) von der Schließposition in die Offenposition und des zweiten Ventils (38) von der Offenposition in die Schließpostion und umgekehrt eingerichtet ist, **dadurch gekennzeichnet, dass** zumindest das erste Ventil (3) eine erste Druckkammer (14) aufweist, welche über eine Befüllöffnung (15) mit dem ersten Zulauf (16) verbunden und über eine Ablauföffnung (18) mit dem ersten Ablauf (19) verbindbar ist, wobei mit der ersten Druckkammer (14) ein den ersten Ablauf (19) vom ersten Zulauf (16) trennendes Ventilelement (20) des ersten Ventils (3) beaufschlagbar ist und wobei die Ablauföffnung (18) mit einem Verschlusselement (21), das in einer Wirkverbindung mit dem Bedienelement (2) steht, öffenbar und verschließbar ist.

2. Ventilbetätigungsvorrichtung (1) nach Anspruch 1, **dadurch gekennzeichnet, dass** das Ventilelement (20) des ersten Ventils (3) an einer vorzugsweise die Befüllöffnung (15) der ersten Druckkammer (14) des ersten Ventils (3) tragenden elastischen Membran (24) aufgehängt ist.

3. Ventilbetätigungsvorrichtung (1) nach Anspruch 1 oder 2, **dadurch gekennzeichnet, dass** die Ablauföffnung (18) des ersten Ventils (3) größer als die Befüllöffnung (15) des ersten Ventils (3) ist.

4. Ventilbetätigungsvorrichtung (1) nach einem der Ansprüche 1 bis 3, **dadurch gekennzeichnet, dass** das zweite Ventil eine zweite Druckkammer (40) aufweist, welche über eine Befüllöffnung (15) mit dem zweiten Zulauf (42) verbunden und über eine Ablauföffnung (18) mit dem zweiten Ablauf (39) verbindbar ist, wobei mit der zweiten Druckkammer (40) ein den zweiten Ablauf (39) vom zweiten Zulauf (42) trennendes Ventilelement (20) des zweiten Ventils (38) beaufschlagbar ist und wobei die Ablauföffnung (18) mit dem oder einem Verschlusselement (44), das in einer Wirkverbindung mit dem Bedienelement (2) steht, öffenbar und verschließbar ist.

5. Ventilbetätigungsvorrichtung (1) nach einem der Ansprüche 1 bis 4, **dadurch gekennzeichnet, dass** das Ventilelement (20) des zweiten Ventils (38) an einer vorzugsweise die oder eine Befüllöffnung (15) der oder einer zweiten Druckkammer (40) des zweiten Ventils (38) tragenden elastischen Membran (24) aufgehängt ist und/oder dass das Verschlusselement (21, 44) zwischen einer ersten Position, in welcher das Ventilelement (20) des ersten Ventils (3) in einen Ventilsitz (26) des ersten Ventils (3) gedrückt ist, und einer zweiten Position, in welcher das Ventilelement (20) des zweiten Ventils (38) in einen Ventilsitz (26) des zweiten Ventils (38) gedrückt ist, verstellbar ist.

6. Ventilbetätigungsvorrichtung (1) nach einem der Ansprüche 1 bis 5, **dadurch gekennzeichnet, dass** eine oder die Ablauföffnung (18) des zweiten Ventils (38) größer als eine oder die Befüllöffnung (15) des zweiten Ventils (38) ist.

7. Ventilbetätigungsvorrichtung (1) nach einem der Ansprüche 1 bis 6, **dadurch gekennzeichnet, dass** der erste Zulauf (16) und der zweite Zulauf (42) miteinander verbunden oder separat voneinander geführt sind und/oder dass die Umschaltvorrichtung (43) räumlich zwischen dem ersten Ventil (3) und dem zweiten Ventil (38) angeordnet ist.

8. Ventilbetätigungsvorrichtung (1) nach einem der Ansprüche 1 bis 7, **dadurch gekennzeichnet, dass** die erste Druckkammer (14) gegen eine oder die zweite Druckkammer (40) mit einer vorzugsweise an dem Verschlusselement (21, 44) anliegenden oder zwischen zwei Verschlusselementen (21, 44) angeordneten Dichtung (22) abgedichtet ist und/oder dass die Ventilelemente (20) und/oder Membranen (24) des ersten Ventils (3) und des zweiten Ventils (38) jeweils zueinander punkt- oder spiegelsymmetrisch angeordnet und/oder ausgebildet sind.

9. Ventilbetätigungsvorrichtung (1) nach einem der Ansprüche 1 bis 8, **dadurch gekennzeichnet, dass** ein vorzugsweise stabförmiges Steuerelement (4) mit dem Bedienelement (2) in Wirkverbindung steht, wobei die Ventilanordnung (41) mit einem distalen Ende (5) des Steuerelements (4) betätigbar ist und/oder dass das oder ein Steuerelement (4) beweglich, insbesondere verschieblich, durch das oder ein Ventilelement (20) des ersten Ventils (3) oder des zweiten Ventils (38) geführt ist.

10. Ventilbetätigungsvorrichtung (1) nach einem der Ansprüche 1 bis 9, **dadurch gekennzeichnet, dass** das oder ein Steuerelement (4) zumindest teilweise in dem ersten oder zweiten Ablauf (39) angeordnet ist und/oder dass das Verschlusselement (21, 44), insbesondere das erste Verschlusselement (21) und ein oder das zweite Verschlusselement (44), an dem Steuerelement (4) ausgebildet ist/sind.

11. Ventilbetätigungsvorrichtung (1) nach einem der Ansprüche 1 bis 10, **dadurch gekennzeichnet, dass** in einer Wirkverbindung zwischen dem oder einem die Ventilanordnung (41) betätigenden Steuerelement (4) und dem Bedienelement (2) eine Ausgleichvorrichtung (6) angeordnet ist, welche einen in einer Aufnahme (7) beweglich geführten Stößel (8) aufweist und eine Relativbewegung des Bedienelements (2) gegen das Steuerelement (4) zulässt, insbesondere wobei ein Rückstellelement (9) vorhanden ist, das der Relativbewegung eine Rückstellkraft entgegensetzt.

12. Ventilbetätigungsvorrichtung (1) nach einem der Ansprüche 1 bis 11, **dadurch gekennzeichnet, dass** das Bedienelement (2) von einer, vorzugsweise an einem Gehäuseteil (47) abgestützten, Bedienelement-Rückstellfeder (27) beaufschlagt ist, insbesondere wobei die Bedienelement-Rückstellfeder (27) eine größere Kraft entwickelt als das oder ein Rückstellelement (9) der oder einer Ausgleichsvorrichtung (6) und/oder die Bedienelement-Rückstellfeder (27) als eine vorzugsweise das oder ein Steuerelement (4) und/oder eine oder die Ausgleichvorrichtung (6) umgreifende Schraubenfeder ausgebildet ist.

13. Ventilbetätigungsvorrichtung (1) nach einem der Ansprüche 1 bis 12, **dadurch gekennzeichnet, dass** das Bedienelement (2) mit einer bistabilen Stellmechanik (31) verbunden ist.

14. Ventilbetätigungsvorrichtung (1) nach einem der Ansprüche 1 bis 13, **dadurch gekennzeichnet, dass** das Bedienelement (2) als Handbedienelement ausgebildet und/oder als motorisch, vorzugsweise elektromotorisch, verstellbares Bedienelement (2) mit einem Antrieb (48) gekoppelt ist.

15. Verfahren zum Umschalten einer Ventilanordnung (41), wobei die Ventilanordnung (41) ein erstes Ventil (3) mit einer ersten Druckkammer (14) und ein zweites Ventil (38) aufweist, wobei die erste Druckkammer (14) über eine Befüllöffnung (15) mit einem ersten Zulauf (16) des ersten Ventils (3) verbunden und über eine Ablauföffnung (18) mit einem ersten Ablauf (19) des ersten Ventils (3) verbindbar ist, wobei zunächst die Ablauföffnung (18) des ersten Ventils (3) geschlossen ist, so dass ein in der ersten Druckkammer (14) aufgebauter Druck das erste Ventil (3) schließt, und das zweite Ventil (38) geöffnet ist, und wobei bei einem Schließen des zweiten Ventils (38) die Ablauföffnung (18) des ersten Ventils (3) geöffnet wird, so dass sich der aufgebaute Druck in der ersten Druckkammer (14) abbaut und das erste Ventil (3) freigegeben wird.

16. Verfahren nach dem vorangehenden Anspruch, **dadurch gekennzeichnet, dass** das zweite Ventil (38) eine zweite Druckkammer (40) aufweist, die über eine Befüllöffnung (15) mit einen zweiten Zulauf (42) des zweiten Ventils (38) verbunden und über eine Ablauföffnung (18) mit einem zweiten Ablauf (39) des zweiten Ventils (38) verbindbar ist, und dass bei dem Schließen des zweiten Ventils (38) die Ablauföffnung (18) des zweiten Ventils (38), insbesondere zeitgleich oder nahezu zeitgleich mit einem Öffnen der Ablauföffnung (18) des ersten Ventils (3), geschlossen wird, so dass sich in der zweiten Druckkammer (40) ein Druck aufbaut, der das zweite Ventil (38) verschließt, und/oder dass eine Ventilbetätigungsvorrichtung (1) nach einem der Ansprüche 1 bis 13 verwendet wird.

## Claims

1. Valve-actuating device (1) having an operating element (2) and a valve arrangement (41), which can be actuated by the operating element (2), wherein the valve arrangement (41) has a first valve (3), by means of which a first inflow (16), in a closed position, can be separated from a first outflow (19) and, in an open position, can be connected to the first outflow (19), and a second valve (38), by means of which a second inflow (42), in a closed position, can be separated from a second outflow (39) and, in an open position, can be connected to the second outflow (39), wherein a switchover device (43), which can be actuated by means of the operating element (2), is designed to transfer in opposite directions the first valve (3) from the closed position into the open position and the second valve (38) from the open position into the closed position, and vice versa, **characterized in that** at least the first valve (3) has a first pressure chamber (14), which is connected to the first inflow (16) via a filling opening (15) and can be connected to the first outflow (19) via an outflow opening (18), wherein the first pressure chamber (14) can act on a valve element (20) of the first valve (3), said valve element separating the first outflow (19) from the first inflow (16), and wherein the outflow opening (18) can be opened and closed by means of a closure element (21) which is in operative connection with the operating element (2).

2. Valve-actuating device (1) according to Claim 1, **characterized in that** the valve element (20) of the first valve (3) is fitted on an elastic membrane (24), which bears preferably the filling opening (15) of the first pressure chamber (14) of the first valve (3).

3. Valve-actuating device (1) according to Claim 1 or 2, **characterized in that** the outflow opening (18) of the first valve (3) is larger than the filling opening (15) of the first valve (3).

4. Valve-actuating device (1) according to one of Claims 1 to 3, **characterized in that** the second valve has a second pressure chamber (40), which is connected to the second inflow (42) via a filling opening (15) and can be connected to the second outflow (39) via an outflow opening (18), wherein the second pressure chamber (40) can act on a valve element (20) of the second valve (38), said valve element separating the second outflow (39) from the second inflow (42), and wherein the outflow opening (18) can be opened and closed by means of the or a closure element (44) which is in operative connection with the operating element (2).

5. Valve-actuating device (1) according to one of Claims 1 to 4, **characterized in that** the valve element (20) of the second valve (38) is fitted on an elastic membrane (24), which bears preferably the or a filling opening (15) of the or a second pressure chamber (40) of the second valve (38), and/or **in that** the closure element (21, 44) can be adjusted between a first position, in which the valve element (20) of the first valve (3) is pushed into a valve seat (26) of the first valve (3), and a second position, in which the valve element (20) of the second valve (38) is pushed into a valve seat (26) of the second valve (38).

6. Valve-actuating device (1) according to one of Claims 1 to 5, **characterized in that** an or the outflow opening (18) of the second valve (38) is larger than a or the filling opening (15) of the second valve (38).

7. Valve-actuating device (1) according to one of Claims 1 to 6, **characterized in that** the first inflow (16) and the second inflow (42) are connected to one another or routed separately from one another, and/or **in that** the switchover device (43) is arranged, in spatial terms, between the first valve (3) and the second valve (38) .

8. Valve-actuating device (1) according to one of Claims 1 to 7, **characterized in that** the first pressure chamber (14) is sealed in relation to a or the second pressure chamber (40) by means of a seal (22) which butts preferably against the closure element (21, 44), or is arranged between two closure elements (21, 44), and/or in that the valve elements (20) and/or membranes (24) of the first valve (3) and of the second valve (38) are arranged and/or designed with point symmetry or mirror symmetry in relation to one another in each case.

9. Valve-actuating device (1) according to one of Claims 1 to 8, **characterized in that** a preferably rodlike control element (4) is in operative connection with the operating element (2), wherein the valve arrangement (41) can be actuated by means of a distal end (5) of the control element (4), and/or **in that** the or a control element (4) is guided in a movable, in particular displaceable, manner through the or a valve element (20) of the first valve (3) or of the second valve (38).

10. Valve-actuating device (1) according to one of Claims 1 to 9, **characterized in that** the or a control element (4) is arranged, at least in part, in the first or second outflow (39), and/or **in that** the closure element (21, 44), in particular the first closure element (21) and a or the second closure element (44), is/are formed on the control element (4).

11. Valve-actuating device (1) according to one of Claims 1 to 10, **characterized in that** a compensating device (6) is arranged in an operative connection between the or a control element (4), which actuates the valve arrangement (41), and the operating element (2), said compensating device having a push rod (8), guided in a movable manner in a mount (7), and allowing the operating element (2) to move relative to the control element (4), in particular wherein a restoring element (9) is present, said restoring element countering the relative movement by a restoring force.

12. Valve-actuating device (1) according to one of Claims 1 to 11, **characterized in that** the operating element (2) is subjected to the action of an operating-element restoring spring (27), which is supported preferably on a housing part (47), in particular wherein the operating-element restoring spring (27) develops a greater force than the or a restoring element (9) of the or a compensating device (6) and/or the operating-element restoring spring (27) is designed in the form of a helical spring, which engages around preferably the or a control element (4) and/or a or the compensating device (6).

13. Valve-actuating device (1) according to one of Claims 1 to 12, **characterized in that** the operating element (2) is connected to a bistable adjustment mechanism (31).

14. Valve-actuating device (1) according to one of Claims 1 to 13, **characterized in that** the operating element (2) is designed in the form of a manual operating element and/or is coupled, in the form of a motoradjustable, preferably electromotive-adjustable, operating element (2), to a drive (48).

15. Method of switching over a valve arrangement (41), wherein the valve arrangement (41) has a first valve (3), with a first pressure chamber (14), and a second valve (38), wherein the first pressure chamber (14) is connected to a first inflow (16) of the first valve (3) via a filling opening (15) and can be connected to a first outflow (19) of the first valve (3) via an outflow opening (18), wherein in the first instance the outflow opening (18) of the first valve (3) is closed, and therefore a pressure built up in the first pressure chamber (14) closes the first valve (3), and the second valve (38) is open, and wherein, upon closure of the second valve (38), the outflow opening (18) of the first valve (3) is opened, and therefore the pressure built up in the first pressure chamber (14) decreases and the first valve (3) is released.

16. Method according to the preceding claim, **characterized in that** the second valve (38) has a second pressure chamber (40), which is connected to a second inflow (42) of the second valve (38) via a filling opening (15) and can be connected to a second outflow (39) of the second valve (38) via an outflow opening (18), and **in that**, upon closure of the second valve (38), the outflow opening (18) of the second valve (38) is closed, in particular at the same time, or more or less at the same time, as the outflow opening (18) of the first valve (3) is opened, and therefore the pressure which builds up in the second pressure chamber (40) is one which closes the second valve (38), and/or **in that** use is made of a valve-actuating device (1) according to one of Claims 1 to 13.

## Revendications

1. Dispositif d'actionnement de soupape (1), avec un élément de commande (2) et un agencement de soupapes (41) actionnable au moyen de l'élément de commande (2), dans lequel l'agencement de soupapes (41) présente une première soupape (3), avec laquelle une première arrivée (16) peut dans une position de fermeture être séparée d'une première évacuation (19) et dans une position d'ouverture être reliée à la première évacuation (19), et une deuxième soupape (38), avec laquelle une deuxième arrivée (42) peut dans une position de fermeture être séparée d'une deuxième évacuation (39) et dans une position d'ouverture être reliée à la deuxième évacuation (39),dans lequel un dispositif de commutation (43) actionnable avec l'élément de commande (2) est configuré pour le transfert en sens contraire de la première soupape (3) de la position de fermeture à la position d'ouverture et de la deuxième soupape (38) de la position d'ouverture à la position de fermeture et inversement, **caractérisé en ce qu'**au moins la première soupape (3) présente une première chambre de pression (14), qui est reliée à la première arrivée (16) par une ouverture de remplissage (15) et qui peut être reliée à la première évacuation (19) par une ouverture d'évacuation (18), dans lequel un élément de soupape (20) de la première soupape (3) séparant la première évacuation (19) de la première arrivée (16) peut être exposé à la première chambre de pression (14) et dans lequel l'ouverture d'évacuation (18) peut être ouverte et fermée avec un élément de fermeture (21), qui est en liaison active avec l'élément de commande (2).

2. Dispositif d'actionnement de soupape (1) selon la revendication 1, **caractérisé en ce que** l'élément de soupape (20) de la première soupape (3) est suspendu à une membrane élastique (24) portant de préférence l'ouverture de remplissage (15) de la première chambre de pression (14) de la première soupape (3).

3. Dispositif d'actionnement de soupape (1) selon une revendication 1 ou 2, **caractérisé en ce que** l'ouverture d'évacuation (18) de la première soupape (3) est plus grande que l'ouverture de remplissage (15) de la première soupape (3).

4. Dispositif d'actionnement de soupape (1) selon l'une quelconque des revendications 1 à 3, **caractérisé en ce que** la deuxième soupape présente une deuxième chambre de pression (40), qui est reliée à la deuxième arrivée (42) par une ouverture de remplissage (15) et qui peut être reliée à la deuxième évacuation (39) par une ouverture d'évacuation (18), dans lequel un élément de soupape (20) de la deuxième soupape (38) séparant la deuxième évacuation (39) de la deuxième arrivée (42) peut être exposé à la deuxième chambre de pression (40) et dans lequel l'ouverture d'évacuation (18) peut être ouverte et fermée avec un élément de fermeture (44), qui est en liaison active avec l'élément de commande (2).

5. Dispositif d'actionnement de soupape (1) selon l'une quelconque des revendications 1 à 4, **caractérisé en ce que** l'élément de soupape (20) de la deuxième soupape (38) est suspendu à une membrane élastique (24) portant de préférence la ou une ouverture de remplissage (15) de la ou d'une deuxième chambre de pression (40) de la deuxième soupape (38) et/ou **en ce que** l'élément de fermeture (21, 44) est déplaçable entre une première position, dans laquelle l'élément de soupape (20) de la première soupape (3) est pressé dans un siège de soupape (26) de la première soupape (3) et une deuxième position, dans laquelle l'élément de soupape (20) de la deuxième soupape (38) est pressé dans un siège de soupape (26) de la deuxième soupape (38).

6. Dispositif d'actionnement de soupape (1) selon l'une quelconque des revendications 1 à 5, **caractérisé en ce qu'**une ou l'ouverture d'évacuation (18) de la deuxième soupape (38) est plus grande qu'une ou l'ouverture de remplissage (15) de la deuxième soupape (38).

7. Dispositif d'actionnement de soupape (1) selon l'une quelconque des revendications 1 à 6, **caractérisé en ce que** la première arrivée (16) et la deuxième arrivée (42) sont reliées l'une à l'autre ou sont menées séparément l'une de l'autre et/ou **en ce que** le dispositif de commutation (43) est disposé spatialement entre la première soupape (3) et la deuxième soupape (38).

8. Dispositif d'actionnement de soupape (1) selon l'une quelconque des revendications 1 à 7, **caractérisé en ce que** la première chambre de pression (14) est rendue étanche par rapport à une ou à la deuxième chambre de pression (40) avec un joint d'étanchéité (22) de préférence appliqué sur l'élément de fermeture (21, 44) ou disposé entre deux éléments de fermeture (21, 44) et/ou **en ce que** les éléments de soupape (20) et/ou les membranes (24) de la première soupape (3) et de la deuxième soupape (38) sont disposés et/ou réalisés avec la symétrie ponctuelle ou de réflexion l'un(e) par rapport à l'autre.

9. Dispositif d'actionnement de soupape (1) selon l'une quelconque des revendications 1 à 8, **caractérisé en ce qu'**un organe de commande (4) de préférence en forme de barre est en liaison active avec l'élément de commande (2), dans lequel l'agencement de soupapes (41) peut être actionné avec une extrémité distale (5) de l'organe de commande (4), et/ou **en ce que** le ou un organe de commande (4) est guidé de façon mobile, en particulier en translation, par le ou un élément de soupape (20) de la première soupape (3) ou de la deuxième soupape (38).

10. Dispositif d'actionnement de soupape (1) selon l'une quelconque des revendications 1 à 9, **caractérisé en ce que** le ou un organe de commande (4) est disposé au moins en partie dans la première ou la deuxième évacuation (39) et/ou **en ce que** l'élément de fermeture (21, 44), en particulier le premier élément de fermeture (21) et un ou le deuxième élément de fermeture (44) est/sont formé(s) sur l'organe de commande (4).

11. Dispositif d'actionnement de soupape (1) selon l'une quelconque des revendications 1 à 10, **caractérisé en ce qu'**un dispositif d'équilibrage (6), qui présente un poussoir (8) guidé en mouvement dans un logement (7) et qui permet un mouvement relatif de l'élément de commande (2) contre l'organe de commande (4), est disposé dans une liaison active entre l'organe de commande (4) actionnant l'agencement de soupapes (41) et l'élément de commande (2), en particulier dans lequel il se trouve un élément de rappel (9), qui oppose une force de rappel au mouvement relatif.

12. Dispositif d'actionnement de soupape (1) selon l'une quelconque des revendications 1 à 11, **caractérisé en ce que** l'élément de commande (2) est soumis à un ressort de rappel d'élément de commande (27) qui prend appui sur une partie de boîtier (47),en particulier dans lequel le ressort de rappel d'élément de commande (27) développe une force plus élevée que le ou un élément de rappel (9) du ou d'un dispositif d'équilibrage (6) et/ou le ressort de rappel d'élément de commande (27) est formé par un ressort hélicoïdal qui de préférence entoure le ou un élément de commande (4) et/ou un ou le dispositif d'équilibrage (6).

13. Dispositif d'actionnement de soupape (1) selon l'une quelconque des revendications 1 à 12, **caractérisé en ce que** l'élément de commande (2) est relié à un mécanisme de réglage bistable (31).

14. Dispositif d'actionnement de soupape (1) selon l'une quelconque des revendications 1 à 13, **caractérisé en ce que** l'élément de commande (2) est formé par un élément de commande manuel et/ou est couplé à un entraînement (48) sous la forme d'un élément de commande (2) déplaçable au moyen d'un moteur, de préférence d'un moteur électrique.

15. Procédé de commutation d'un agencement de soupapes (41), dans lequel l'agencement de soupapes (41) présente une première soupape (3) avec une première chambre de pression (14) et une deuxième soupape (38),dans lequel la première chambre de pression (14) est reliée à une première arrivée (16) de la première soupape (3) par une ouverture de remplissage (15) et peut être reliée à une première évacuation (19) de la première soupape (3) par une ouverture d'évacuation (18), dans lequel d'abord l'ouverture d'évacuation (18) de la première soupape (3) est fermée, de telle manière qu'une pression créée dans la première chambre de pression (14) ferme la première soupape (3) et la deuxième soupape (38) est ouverte, et dans lequel, lors d'une fermeture de la deuxième soupape (38) l'ouverture d'évacuation (18) de la première soupape (3) s'ouvre, de telle manière que la pression créée dans la première chambre de pression (14) soit supprimée et que la première soupape (3) soit libérée.

16. Procédé selon la revendication précédente, **caractérisé en ce que** la deuxième soupape (38) présente une deuxième chambre de pression (40), qui est reliée à une deuxième arrivée (42) de la deuxième soupape (38) par une ouverture de remplissage (15) et qui peut être reliée à une deuxième évacuation (39) de la deuxième soupape (38) par une ouverture d'évacuation (18), et **en ce que**, lors de la fermeture de la deuxième soupape (38) l'ouverture d'évacuation (18) de la deuxième soupape (38) est fermée simultanément ou presque simultanément à une ouverture de l'ouverture d'évacuation (18) de la première soupape (3), de telle manière qu'il se crée dans la deuxième chambre de pression (40) une pression, qui ferme la deuxième soupape (38), et/ou **en ce que** l'on utilise un dispositif d'actionnement de soupape (1) selon l'une quelconque des revendications 1 à 13.
